# EUROPEAN PATENT APPLICATION

(11) **EP 3 056 751 A1**
(43) Date of publication of application: **17.08.2016**
(21) Application number: 15305227.9
(22) Date of filing: 16.02.2015
(51) Int. Cl.: F16C 33/46, F16C 33/58, F16C 35/067, F16C 19/46, F16F 15/26, F16C 3/18

(54) **A rolling bearing and a mechanical system comprising such a rolling bearing**

(71) Applicant: Aktiebolaget SKF, 415 50 Göteborg (SE)
(72) Inventor: Maffucci, Julien, 37230 PERNAY (FR); Corbett, Richard, 37230 FONDETTES (FR); Hingouet, Gwénaêl, 37540 SAINT-CYR-SUR-LOIRE (FR)
(74) Representative: Tweedlie, Diane Harkness

(57) **Abstract**

The invention concerns a rolling bearing (10), adapted for mounting on a balancing shaft (2) and comprising: an outer ring (20) having a cylindrical outer surface (21) and a cylindrical inner surface (22) centered on a central axis (X10), and two annular lateral surfaces (23, 24) extending radially to the central axis (X10) and defining a ring width (w20) parallel to the central axis (X10); a cage (30) having pockets (38) distributed around the central axis (X10) and two annular lateral surfaces (33, 34) extending radially to the central axis (X10) and defining a cage width (w30) parallel to the central axis (X10); and rolling members (12) mounted in the pockets (38) of the cage (30) and disposed in rolling contact with the inner surface (22) of the outer ring (20); wherein the cage width (w30) is superior or equal to the ring width (w20). The invention also concerns a mechanical system (1) comprising such a rolling bearing (10).

## Description

### TECHNICAL FIELD OF THE INVENTION

The invention concerns a rolling bearing, adapted for mounting on a balancing shaft. The invention also concerns a mechanical system, for example a vehicle engine, comprising a balancing shaft and such a rolling bearing.

### BACKGROUND OF THE INVENTION

US-A-3 384 429 discloses an example of needle rolling bearing, comprising an outer ring, a cage and needles mounted in pockets of the cage. The rolling bearing also comprises thrust rings detachably secured on both sides of the outer ring. The rolling bearing is mounted on a shaft, with the thrust rings disposed in bearing contact against a thrust collar and a shoulder of the shaft.

In practice, downsizing of a mechanical system allows to reduce its weight and cost. In some applications, for example when the mechanical system includes a balancing shaft, it is interesting to further reduce friction and power losses.

### SUMMARY OF THE INVENTION

The aim of the invention is to provide an improved rolling bearing, providing the advantages here-above.

To this end, the invention concerns a rolling bearing, adapted for mounting on a balancing shaft and comprising: an outer ring having a cylindrical outer surface and a cylindrical inner surface centered on a central axis, and two annular lateral surfaces extending radially to the central axis and defining a ring width parallel to the central axis; a cage having pockets distributed around the central axis and two annular lateral surfaces extending radially to the central axis and defining a cage width parallel to the central axis; and rolling members mounted in the pockets of the cage and disposed in rolling contact with the inner surface of the outer ring. According to the invention, the cage width is superior or equal to the ring width.

Thanks to the invention, the radial load capacity of the rolling bearing is increased. The cage protrudes axially on at least one side of the outer ring, preferably on both sides of the outer ring. The cage can be centered between radial parts belonging or mounted on the shaft, reducing the shocks and vibrations due to axial cage displacements. Thus, the rolling bearing mounted on a balancing shaft allows a reduction of weight, friction and power losses, while providing a robust arrangement.

According to further aspects of the invention which are advantageous but not compulsory, such a rolling bearing may incorporate one or several of the following features:
- The cage width is superior to the ring width.
- The cage width is equal to the ring width.

The cage protrudes axially beyond at least one lateral surface of the outer ring.
- The cage protrudes axially beyond both lateral surfaces of the outer ring.
- An axial overstepping is defined parallel to the central axis on at least one side of the outer ring, from the lateral surface of the outer ring up to the lateral surface of the cage, the axial overstepping being comprised between 0,2 and 3 millimeters, and preferably between 0,2 and 0,5 millimeter.
- Axial oversteppings are defined on both sides of the outer ring.
- The rolling members are needles or rollers extending parallel to the central axis.

The invention also concerns a mechanical system, for example a vehicle engine, comprising: a balancing shaft having a axial part centered on the central axis and at least one radial part extending radially to the central axis; a second member secured to the balancing shaft; a housing which is located between the radial part and the second member and which comprises two annular lateral surfaces extending radially to the central axis and defining a housing width parallel to the central axis; and a rolling bearing as defined here-above, the outer ring being mounted in the housing, the rolling members being disposed in rolling contact with the axial part of the balancing shaft, the radial part and the second member forming axial guidance means for the cage disposed therebetween, the cage width being superior to the housing width.

According to further aspects of the invention which are advantageous but not compulsory, such a mechanical system may incorporate one or several of the following features:
- The ring width is superior or equal to the housing width.
- The ring width is equal to the housing width.
- The ring width is superior to the housing width.
- An axial clearance is defined parallel to the central axis on at least one side of the cage, from the lateral surface of the cage up to the lateral surface of the radial part or of the second member, the axial clearance being inferior or equal to 0,5 millimeters, preferably equal to 0,3 millimeters.
- Axial clearances are defined on both sides of the cage.
- The second member is another radial part formed integral with the balancing shaft.
- The second member is an unbalanced part, for example a cam or a flying arm, which is formed eccentric relative to the central axis.
- The radial part is an unbalanced part, for example a cam or a flying arm, which is formed eccentric relative to the central axis.
- The balancing shaft is a camshaft and the unbalanced parts are cams.
- The balancing shaft is a crankshaft and the unbalanced parts are flying arms supporting crankpins.

### BRIEF DESCRIPTION OF THE DRAWINGS

The invention will now be explained in correspondence with the annexed figures, and as an illustrative example, without restricting the object of the invention. In the annexed figures:
- figure 1 is a sectional view of a mechanical system according to the invention, equipped with a rolling bearing also according to the invention ;
- figure 2 is a sectional view, at a larger scale, showing detail II of figure 1 ;
- figure 3 is a sectional view similar to figure 1, showing a mechanical system according to the invention, equipped with a second embodiment of a rolling bearing according to the invention ; and
- figure 4 is a sectional view, at a larger scale, showing detail IV of figure 3.

### DETAILED DESCRIPTION OF SOME EMBODIMENTS

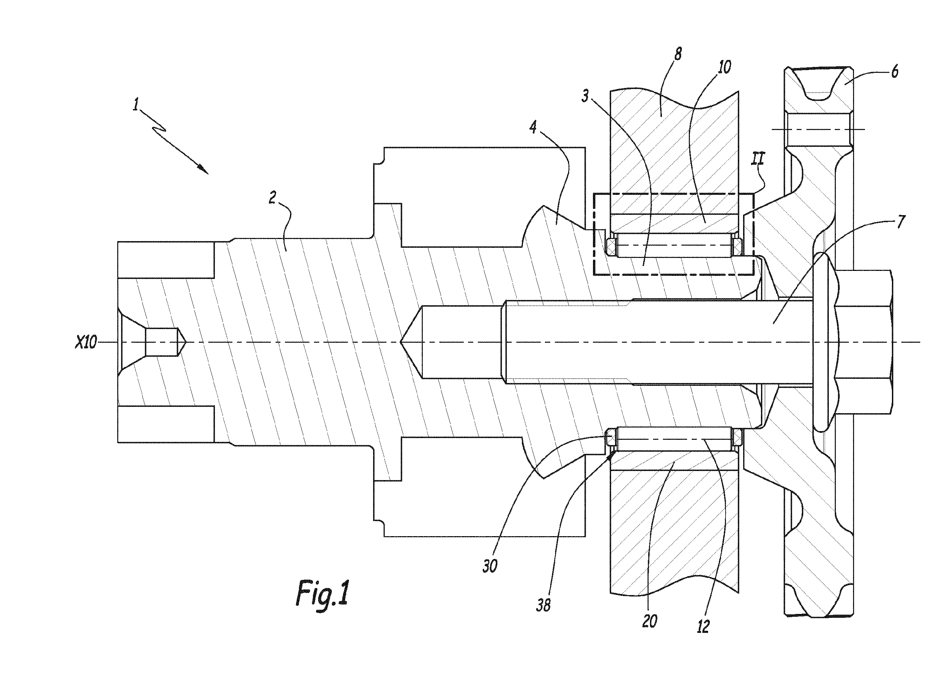

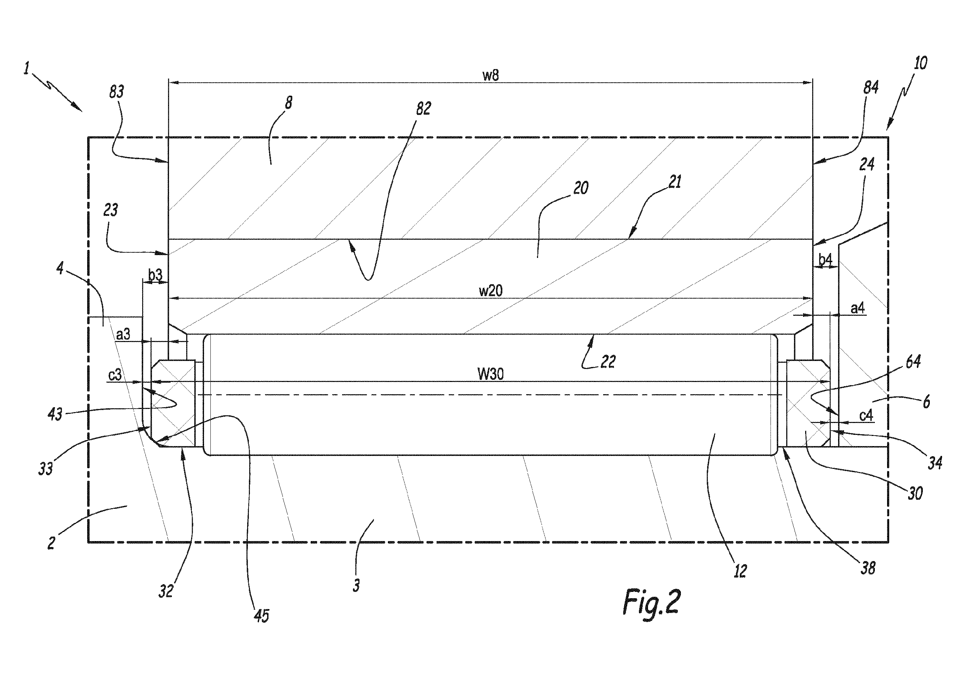

Figures 1 and 2 partly show a mechanical system 1 according to the invention, for example a vehicle engine.

System 1 comprises a balancing shaft 2 including an axial part 3 and a radial part 4, a gear 6 secured to shaft 2 by a screw 7, and a housing 8 located between radial part 4 and gear 6. In the present case, radial part 4 is a counterweight or unbalanced mass. A lateral surface 43 of radial part 4 and a lateral surface 64 of gear 6 are facing each other. Housing 8 comprises a cylindrical inner bore 82 and two lateral surfaces 83 and 84 defining a housing width w8.

Moreover, system 1 comprises a rolling bearing 10 also defined according to the invention. Rolling bearing 10 is mounted on axial part 3 of shaft 2 and in bore 82 of housing 8, between surface 43 of radial part 4 and surface 64 of gear 6. Rolling bearing 10 is centered on a central axis X10 and comprises rolling members 12, an outer ring 20 and a cage 30. Rolling members 12 are needles or rollers extending parallel to axis X10. Part 4 and gear 6 form axial guidance means for rolling bearing 1, in particular axial guidance means for cage 30 disposed therebetween.

As shown on figure 1, constitutive elements of system 1 are also centered on axis X10. In the context of the invention, "axially" means parallel to axis X10, while "radially" means perpendicular to axis X10.

Outer ring 20 has a cylindrical outer surface 21 and a cylindrical inner surface 22 centered on axis X10. Surface 21 is fitted in bore 82, while surface 22 is in rolling contact with rolling members 12. Outer ring 20 also has two annular lateral surfaces 23 and 24 extending radially to axis X10. Outer ring 20 has a ring width w20 defined parallel to axis X10 between lateral surfaces 23 and 24.

Cage 30 is radially spaced from outer ring 20. Cage 30 is in contact with axial part 3 and with a corner 45 formed between parts 3 and 4 of shaft 2. Cage 30 has an inner surface 32 in contact with axial part 3. Cage 30 has two annular lateral surfaces 33 and 34 extending radially to axis X10. Surface 33 faces surface 43, while surface 34 faces surface 64. Part 4 and gear 6 form axial guidance means for cage 30 disposed therebetween. Cage 30 comprises pockets 38 distributed around axis X10. Cage 30 has a cage width w30 defined parallel to axis X10 between lateral surfaces 33 and 34. Rolling members 12 are mounted in pockets 38 and disposed in rolling contact, on the one hand, with inner surface 22 of outer ring 20 and, on the other hand, with axial part 3 of shaft 2.

As shown on figures 1 and 2, cage width w30 is superior to ring width w20. More precisely, cage 30 protrudes axially on both sides of outer ring 20.

Besides, in the example of figures 1 and 2, widths w8 and w20 are substantially equal. Surface 23 is aligned with surface 83, while surface 24 is aligned with surface 84, radially to axis X10.

Parallel to axis X10, several distances a3, b3, c3 are defined on a first side of bearing 10 near surfaces 23, 33 and 43, while several distances a4, b4, c4 are defined on a second side of bearing 10 near surfaces 24, 34 and 64. An axial overstepping a3 is defined from surface 23 up to surface 33. An axial clearance b3 is defined from surface 23 up to surface 43. An axial clearance c3 is defined from surface 33 up to surface 43. An axial overstepping a4 is defined from surface 24 up to surface 34. An axial clearance b4 is defined from surface 24 up to surface 64. An axial clearance c4 is defined from surface 34 up to surface 64.

Axial oversteppings a3 and a4 are for example comprised between 0,2 and 3 millimeters, and preferably between 0,2 and 0,5 millimeter. In other words, cage 30 protrudes axially beyond at least one lateral surface 23 or 24 of outer ring 20 and beyond corresponding lateral surface 83 or 84 of housing 8. Preferably, as shown on figures 1 and 2, cage 30 protrudes beyond both lateral surfaces 23 and 24 of outer ring 20 and beyond both corresponding lateral surfaces 83 and 84 of housing 8.

Axial clearances c3 and c4 are inferior or equal to 0,5 millimeters, preferably equal to 0,3 millimeters. The cage is centered between part 4 and gear 6, thus reducing the shocks and vibrations due to axial cage displacements. In operation, the axial movement of cage 30 is stopped either by surface 43 of radial part 4 on one side or by surface 64 of gear 6 on the other side.

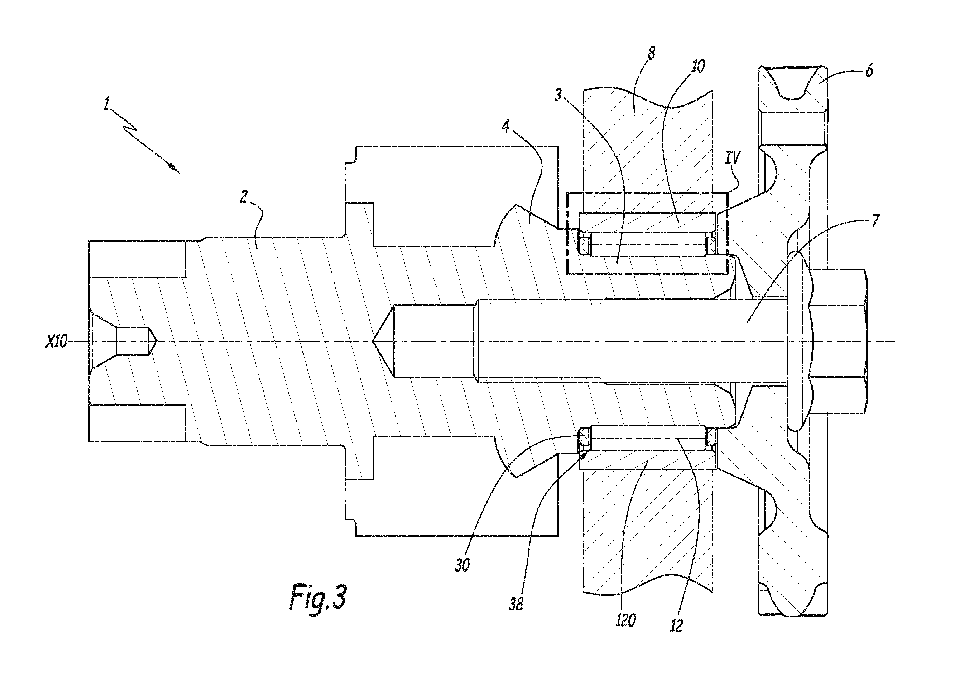

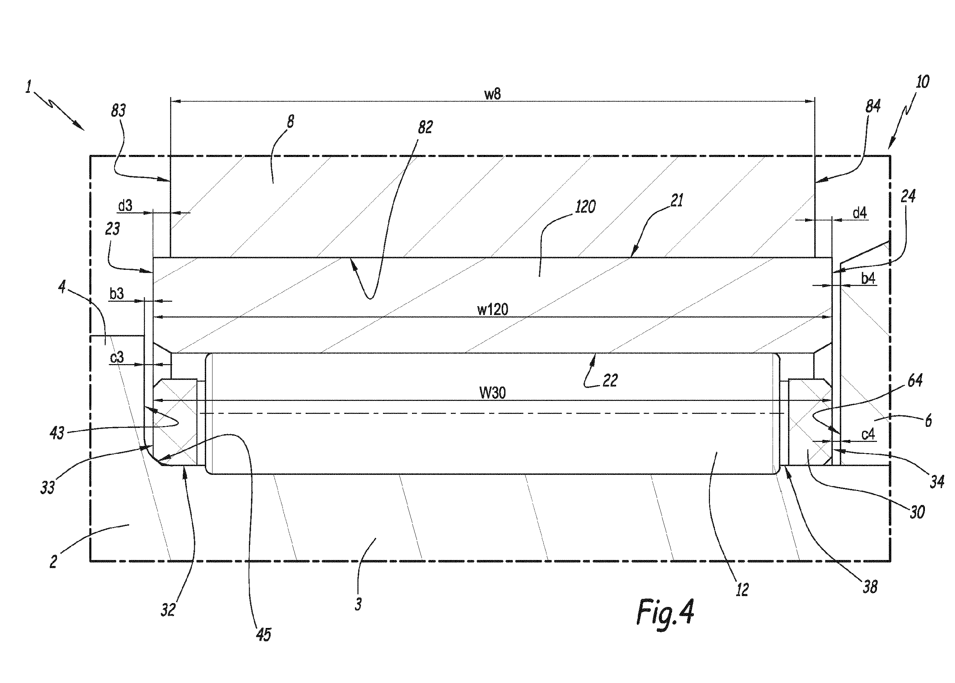

Figures 3 and 4 show mechanical system 1 equipped with a second embodiment of a rolling bearing 10 according to the invention, comprising an outer ring 120 having a ring width w120 substantially equal to cage width w30. Surface 23 is aligned with surface 33, while surface 24 is aligned with surface 34, radially to axis X10. Otherwise, mechanical system 1 and rolling bearing 10 are similar to the first embodiment and their constitutive elements have the same numerical references.

Besides, ring width w120 is superior to housing width w8. Outer ring 120 and cage 30 protrude axially on both sides of housing 8.

Parallel to axis X10, several distances b3, c3, d3 are defined on a first side of bearing 10 near surfaces 23, 33 and 43, while several distances b4, c4, d4 are defined on a second side of bearing 10 near surfaces 24, 34 and 64. An axial clearance b3 is defined from surface 23 up to surface 43. An axial clearance c3 is defined from surface 33 up to surface 43. An axial overstepping d3 is defined from surface 83 up to surface 23. An axial clearance b4 is defined from surface 24 up to surface 64. An axial clearance c4 is defined from surface 34 up to surface 64. An axial overstepping d4 is defined from surface 84 up to surface 24.

In the examples of figures 3 and 4, axial clearances b3 and c3 are equal to each other, while axial clearances b4 and c4 are equal to each other. Axial clearances b3, c3, b4 and c4 are inferior or equal to 0,5 millimeters, preferably equal to 0,3 millimeters. In operation, the axial movement of cage 30 is stopped either by surface 43 of radial part 4 on one side or by surface 64 of gear 6 on the other side.

Axial oversteppings d3 and d4 are for example comprised between 1,5 and 10 millimeters, and preferably between 2 and 5 millimeters. In other words, outer ring 120 and cage 30 protrude axially beyond at least one lateral surface 83 or 84 of housing 8. Preferably, as shown on figures 3 and 4, axial overstepping d3 and d4 are defined on both sides of housing 8. In other words, outer ring 120 and cage 30 protrude beyond both lateral surfaces 83 and 84 of housing 8.

Other non-shown embodiments can be implemented within the scope of the invention. In particular, shaft 2, housing 8 and rolling bearing 10 can have different shapes or arrangements within the scope of the invention.

According to a non-shown embodiment, member 6 can be a radial part formed integral with shaft 2.

According to another non-shown embodiment, part 4 and/or member 6 is an unbalanced part, for example a cam or a flying arm, which is formed eccentric relative to axis X10.

According to a particular embodiment, shaft 2 is a camshaft and unbalanced parts 4 and 6 are cams.

According to another particular embodiment, shaft 2 is a crankshaft and unbalanced parts 4 and 6 are flying arms supporting crankpins.

According to another non-shown embodiment, an axial overstepping a3 or a4 is defined on only one side of cage 30.

According to another non-shown embodiment, an axial overstepping d3 or d4 is defined on only one side of housing 8.

Whatever the embodiment of the invention, the cage width w30 is superior or equal to the ring width w20 / w120.

In addition, technical features of the different embodiments can be, in whole or part, combined with each other. Thus, the mechanical system 1 and/or the rolling bearing 10 can be adapted to the specific requirements of the application.

## Claims

1. A rolling bearing (10), adapted for mounting on a balancing shaft (2) and comprising:
- an outer ring (20 ; 120) having:
- a cylindrical outer surface (21) and a cylindrical inner surface (22) centered on a central axis (X10), and
- two annular lateral surfaces (23, 24) extending radially to the central axis (X10) and defining a ring width (w20 ; w120) parallel to the central axis (X10);
- a cage (30) having pockets (38) distributed around the central axis (X10) and two annular lateral surfaces (33, 34) extending radially to the central axis (X10) and defining a cage width (w30) parallel to the central axis (X10); and
- rolling members (12) mounted in the pockets (38) of the cage (30) and disposed in rolling contact with the inner surface (22) of the outer ring (20 ; 120);
wherein the cage width (w30) is superior or equal to the ring width (w20 ; w120).

2. The rolling bearing (10) according to claim 1, wherein the cage width (w30) is superior to the ring width (w20).

3. The rolling bearing (10) according to any one of claims 1 and 2, wherein the cage (30) protrudes axially beyond at least one lateral surface (23, 24) of the outer ring (20).

4. The rolling bearing (10) according to any one of claims 1 and 2, wherein the cage (30) protrudes axially beyond both lateral surfaces (23, 24) of the outer ring (20).

5. The rolling bearing (10) according to any one of claims 3 and 4, wherein an axial overstepping (a3, a4) is defined parallel to the central axis (X10) on at least one side of the outer ring (20), from the lateral surface (23 ; 24) of the outer ring (20) up to the lateral surface (33 ; 34) of the cage (30), the axial overstepping (a3, a4) being comprised between 0,2 and 3 millimeters, and preferably between 0,2 and 0,5 millimeter.

6. The rolling bearing (10) according to claim 5, wherein axial oversteppings (a3 ; a4) are defined on both sides of the outer ring (20).

7. The rolling bearing (10) according to any one of the previous claims 1 to 6, wherein the rolling members (12) are needles or rollers extending parallel to the central axis (X10).

8. A mechanical system (1), for example a vehicle engine, comprising:
- a balancing shaft (2) having a axial part (3) centered on the central axis (X10) and at least one radial part (4) extending radially to the central axis (X10);
- a second member (6) secured to the balancing shaft (2) ;
- a housing (8) which is located between the radial part (4) and the second member (6) and which comprises two annular lateral surfaces (83, 84) extending radially to the central axis (X10) and defining a housing width (w8) parallel to the central axis (X10); and
- a rolling bearing (10) according to any one of the previous claims 1 to 7, the outer ring (20, 120) being mounted in the housing (8), the rolling members (12) being disposed in rolling contact with the axial part (3) of the balancing shaft (2), the radial part (4) and the second member (6) forming axial guidance means for the cage (30) disposed therebetween, the cage width (w30) being superior to the housing width (w8).

9. The mechanical system (1) according to claim 8, wherein the ring width (w20) is equal to the housing width (w8).

10. The mechanical system (1) according to claim 8, wherein the ring width (w120) is superior to the housing width (w8).

11. The mechanical system (1) according to any one of claims 8 to 10, wherein an axial clearance (c3 ; c4) is defined parallel to the central axis (X10) on at least one side of the cage (30), from the lateral surface (33, 34) of the cage (30) up to the lateral surface (43 ; 64) of the radial part (4) or of the second member (6), the axial clearance (c3 ; c4) being inferior or equal to 0,5 millimeters, preferably equal to 0,3 millimeters.

12. The mechanical system (1) according to claim 11, wherein axial clearances (c3 ; c4) are defined on both sides of the cage (30).

13. The mechanical system (1) according to any one of claims 8 to 12, wherein the second member (6) is a gear secured to the balancing shaft (2).

14. The mechanical system (1) according to any one of claims 8 to 12, wherein the second member (6) is another radial part formed integral with the balancing shaft (2).

15. The mechanical system (1) according to any one of claims 8 to 14, wherein the radial part (4) is an unbalanced part, for example a cam or a flying arm, which is formed eccentric relative to the central axis (X10).
